# EUROPEAN PATENT APPLICATION

(11) **EP 3 756 518 A1**
(43) Date of publication of application: **30.12.2020**
(21) Application number: 19181987.9
(22) Date of filing: 24.06.2019
(51) Int. Cl.: A47J 37/06, H05B 6/64

(54) **SUPPORT SYSTEM FOR AN OBJECT, IN PARTICULAR FOR FOOD BEING TREATED**

(71) Applicant: ELECTROLUX APPLIANCES AKTIEBOLAG, 105 45 Stockholm (SE)
(72) Inventor: HOFMANN, Arnd, 91541 Rothenburg ob der Tauber (DE); SCHLÖTTERER-FRATOIANNI, Klaus, 91541 Rothenburg ob der Tauber (DE)
(74) Representative: Electrolux Group Patents

(57) **Abstract**

The present invention relates to a support system (10) for an object, in particular for food (34) being treated. The support system (10) comprises an upper part (12) and a lower part (14). The upper part (12) includes a support plate (16) for bearing the object (34). The support system (10) comprises at least three guiding elements (20) and a guiding rail (22). The guiding elements (20) belong to one of the upper part (12) or the lower part (14), while the guiding rail (22) belongs to the other one of the upper part (12) or the lower part (14). The guiding rail (22) is formed as a circular ring and includes at least three identical segments. Each segment of the guiding rail (22) includes at least three horizontal sections arranged at different levels. The upper part (12) is rotatable with respect to the lower part (14) around a common vertical central axis. The guiding elements (20) are sliding along the guiding rail (22) during the rotation of the upper part (12) with respect to the lower part (14). The level of the support plate (16) is adjustable by the rotation of the upper part (12) with respect to the lower part (14).

## Description

The present invention relates to a support system for an object, in particular for food being treated. Further, the present invention relates to a support system for food being treated in a cooking oven, in particular in a microwave oven. Moreover, the present invention relates to a cooking oven, in particular a microwave oven or an oven with microwave heating function, comprising at least one support system for food being treated.

Many applications require a support system for an object. Advantageously, the level of a bearing area for said object should be adjustable. In particular, the level of food being treated in an oven, especially in a microwave oven, should be selectable by the user.

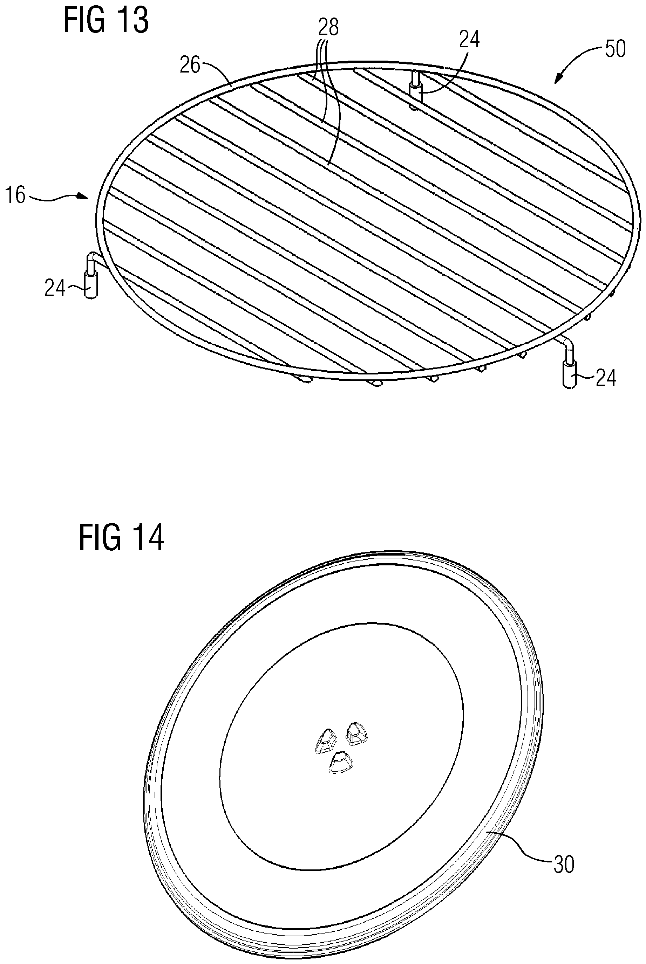

FIG 13 illustrates a schematic perspective view of a support grid 50 according to the prior art. The support grid 50 is circular and includes the circular ring 26 and a plurality of parallel rectilinear rods 28 attached at said circular ring 26. Further, the support grid 50 includes three foot elements 24 extending downwards from the border of said support grid 50. The support grid 50 is arrangeable on a turntable 30 of the microwave oven. The use of the support grid 50 provides a further level for the food in addition to the level of the turntable 30.

FIG 14 illustrates a schematic perspective view of a turntable 30 for the microwave oven according to the prior art. The level of the turntable 30 is the lower level for the food within the cavity of the microwave oven. The arrangement of the support grid 50 shown in FIG 13 on said turntable 30 increases the level of the food by the height of its foot elements 24. Thus, in the prior art two levels for the food in the microwave oven can be selected by using the support grid 50 on the turntable 30 and by omitting said support grid 50.

It is an object of the present invention to provide a support system for an object, wherein the level of the bearing surface is adjustable in a simple way.

The object is achieved by the support system for an object according to claim 1.

According to the present invention a support system for an object, in particular for food being treated, is provided, wherein:
- the support system comprises an upper part and a lower part,
- the upper part includes a support plate for bearing the object,
- the support system comprises at least three guiding elements and a guiding rail,
- the guiding elements belong to one of the upper part or the lower part, while the guiding rail belongs to the other one of the upper part or the lower part,
- the guiding rail is formed as a circular ring and includes at least three identical segments,
- each segment of the guiding rail includes at least three horizontal sections arranged at different levels,
- the upper part is rotatable with respect to the lower part around a common vertical central axis,
- the guiding elements are sliding along the guiding rail during the rotation of the upper part with respect to the lower part, and
- the level of the support plate is adjustable by the rotation of the upper part with respect to the lower part.

The core of the present invention is that the upper part and the lower part of the support system are rotatable to each other, wherein the level of the support plate is adjusted by said rotation. The upper part can be rotated with respect to the lower part manually by the user. It is not necessary to exchange any components of the support system in order to change the level of the support plate. In particular, the support system is provided for supporting food in a cooking oven, in particular in a microwave oven. The support system of the present invention is suitable for already existing cooking ovens.

For example, the upper part and the lower part of the support system are made of steel wires. Optionally, said steel wires are coated by chrome or chrome alloy. Alternatively, the upper and/or lower part of the support system are made of stainless steel. Moreover, the upper and/or lower part of the support system may be made of high-temperature polymers.

Preferably, each segment of the guiding rail includes at least two inclined sections arranged between two adjacent horizontal sections. Said inclined sections allow an easy rotation of the upper part.

In particular, the guiding rail includes at least three vertical sections arranged between two adjacent segments of said guiding rail.

Further, the guiding elements may enclose partially or completely the guiding rail.

For example, the support plate is a grid.

According to one embodiment of the present invention, the upper part includes at least three support elements extending downwards from the support plate, wherein the guiding elements are attached at the lower ends of said support elements in each case, while the lower part includes the guiding rail and at least three foot elements extending downwards from said guiding rail.

According to another embodiment of the present invention, the upper part includes the guiding rail, while the lower part includes the guiding elements.

In this case, the lower part may include at least three support elements, wherein the guiding elements are attached at the upper ends of said support elements.

Further, the lower part includes a base part formed as a circular ring, wherein the support elements extend upwards from said base part. The circular ring allows a stable arrangement for the entire support system.

Alternatively, the lower part includes a bogie with at least three wheels, wherein the support elements extend upwards from said bogie, and wherein preferably a turnstile is arranged in the centre of said bogie.

In particular, the bogie is rotatable around a central vertical axis and drivable or driven by a motor.

Further, the present invention relates to a cooking oven, in particular a microwave oven or an oven with microwave heating function, wherein the cooking oven comprises at least one support system mentioned above.

According to one embodiment, the cooking oven comprises at least one turntable for supporting the support system, so that the support system is also rotatable.

According to another embodiment, the cooking oven comprises at least one motor connectable or connected to the lower part of the support system, so the support system is rotatable around its central vertical axis.

Preferably, the motor is arranged beneath a bottom of a cavity of the cooking oven, wherein preferably said motor allows a direct drive of the lower part of the support system.

Novel and inventive features of the present invention are set forth in the appended claims.

The present invention will be described in further detail with reference to the drawings, in which
- FIG 1: illustrates a schematic perspective view of a support system according to a first embodiment of the present invention,
- FIG 2: illustrates a schematic front view of the support system according to the first embodiment of the present invention,
- FIG 3: illustrates a schematic perspective view of the support system according to a second embodiment of the present invention,
- FIG 4: illustrates a schematic front view of the support system according to the second embodiment of the present invention,
- FIG 5: illustrates a schematic perspective view of the support system according to a third embodiment of the present invention,
- FIG 6: illustrates a schematic front view of the support system according to the third embodiment of the present invention,
- FIG 7: illustrates a schematic perspective view of the support system according to a fourth embodiment of the present invention,
- FIG 8: illustrates a schematic front view of the support system according to the fourth embodiment of the present invention,
- FIG 9: illustrates a schematic perspective view of the support system according to a fifth embodiment of the present invention,
- FIG 10: illustrates a schematic front view of the support system according to the fifth embodiment of the present invention,
- FIG 11: illustrates a schematic perspective view of the support system according to a sixth embodiment of the present invention,
- FIG 12: illustrates a schematic front view of the support system according to the sixth embodiment of the present invention,
- FIG 13: illustrates a schematic perspective view of a support grid according to the prior art, and
- FIG 14: illustrates a schematic perspective view of a turntable for a microwave oven according to the prior art.

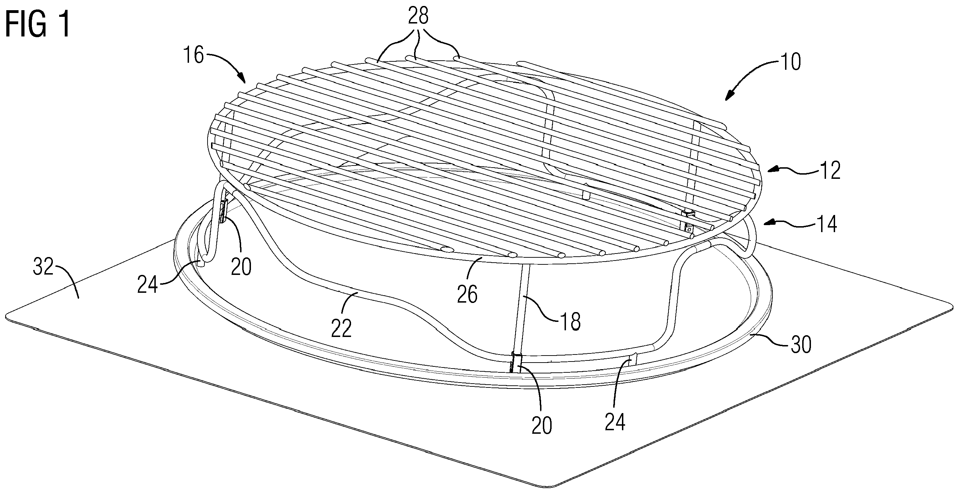

FIG 1 illustrates a schematic perspective view of a support system 10 according to a first embodiment of the present invention. In particular, the support system 10 is provided for supporting food being prepared in a microwave oven. In general, the support system 10 is provided for an arbitrary object arrangeable at different levels.

The support system 10 comprises an upper part 12 and a lower part 14. The upper part 12 includes a support plate 16. In this embodiment, the support plate 16 is a circular grid including a circular ring 26 and a plurality of parallel rectilinear rods 28 attached on said circular ring 26. The lower part 14 includes foot elements 24. In this example, the lower part 14 includes three foot elements 24. In general, the lower part 14 includes three or more foot elements 24.

Further, the support system 10 comprises support elements 18, guiding elements 20 and a guiding rail 22. In this embodiment, each guiding element 20 corresponds with one support element 18. In this example, the support system 10 comprises three support elements 18 and three guiding elements 20. In general, the support system 10 comprises three or more support elements 18 and guiding elements 20.

According to the first embodiment, the support elements 18 and the guiding elements 20 belong to the upper part 12, while the guiding rail 22 belongs to the lower part 14. The three support elements 18 extend vertically downwards from the border of the support plate 16. Preferably, the three support elements 18 form the corners of an equilateral triangle. Each guiding element 20 is attached at a lower end of the corresponding support element 18. The foot elements 24 are attached at the guiding rail 22 and support said guiding rail 22.

The guiding rail 22 is formed as a closed circular loop and includes horizontal, vertical and inclined sections. In this example, the guiding rail 22 comprises three equal segments. In general, the guiding rail 22 comprises three or more equal segments. Each segment includes a lower horizontal section, a lower inclined section, an intermediate horizontal section, an upper inclined section, an upper horizontal section and a vertical section arranged in series. The guiding rail 22 is symmetric in view of a 120° rotation around its central vertical axis.

The guiding elements 20 of the upper part 12 enclose at least partially the guiding rail 22 of the lower part 14 and are moveable along said guiding rail 22 between two adjacent foot elements in each case. In this way, the upper part 12 is rotatable with respect to the lower part 14 around a common central vertical axis manually by the user, wherein the level of the support plate 16 is variable. The three horizontal sections of each segment of the guiding rail 22 correspond with one level of the support plate 16 in each case. Thus, three different levels of the support plate 16 are adjustable.

In this embodiment, the support system 10 is arranged on a turntable 30 of a microwave oven. Said turntable 30 is arranged above a bottom 32 of the microwave oven cavity. Thus, the vertical position of food 34 arranged on the support plate 16 is adjustable. In this example, three vertical positions of the food 34 can be selected.

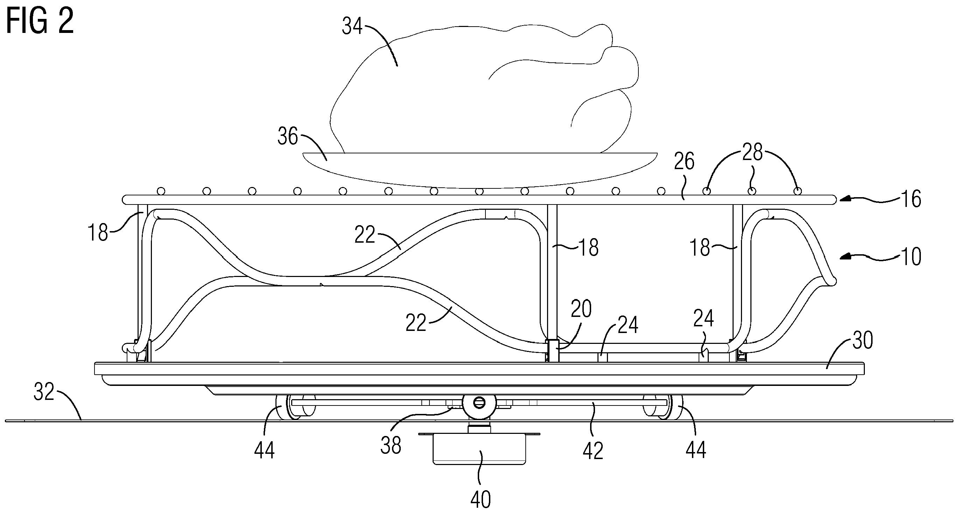

FIG 2 illustrates a schematic front view of the support system 10 according to the first embodiment of the present invention.

The support system 10 is arranged on the turntable 30 of the microwave oven. The turntable 30 is arranged on a bogie 42 with three wheels 44. In general, the turntable 30 is arranged on the bogie 42 with three or more wheels 44. In turn, the bogie 42 with the wheels 44 is arranged on the bottom 32 of the microwave oven cavity. The bogie 42 with the wheels 44 forms a bogie assembly for the turntable 30. In this example, the bogie assembly includes the three wheels 44. A turnstile 38 is attached beneath the centre of the turntable 30. Said turnstile 38 is connected to a vertical shaft of a motor 40 arranged beneath the bottom 32 of the microwave oven cavity. The motor 40 is provided for driving the turntable 30.

The food 34 is arranged on a plate 36. In turn, said plate 36 is arranged on the support plate 16 formed by the circular ring 26 and the rectilinear rods 28. In this embodiment, the support plate 16, the support elements 18 and the guiding elements 20 form the upper part 12 of the support system 10, while the lower part 14 of said support system 10 is formed by the guiding rail 22 and the foot elements 24.

The upper part 12 is rotatable with respect to the lower part 14 around the common central vertical axis manually by the user, wherein the guiding elements 20 are sliding along the guiding rail 22. In FIG 2 the guiding elements 20 enclose the lower horizontal sections of the guiding rail 24, so that a lowest level of the support plate 16 is selected. After a clockwise rotation of the upper part 12 in view of the lower part 14 manually by the user, the guiding elements 20 would pass the lower inclined sections of the guiding rail 22 and reach the intermediate horizontal sections of said guiding rail 22, so that an intermediate level of the support plate 16 would be selected. After a further clockwise rotation of the upper part 12 in view of the lower part 14 manually by the user, the guiding elements 20 would pass the upper inclined sections of the guiding rail 22 and reach the upper horizontal sections of said guiding rail 22, so that an upper level of the support plate 16 would be selected.

On the one hand, the upper part 12 is rotatable with respect to the lower part 14 around the common central vertical axis manually by the user in order to adjust the level of the support plate 16 and the food 34. On the other hand, the turntable 30 with the complete support system 10 is rotatable with respect to the microwave oven by the motor 40 around the common central vertical axis in order to rotate the food 34 on the support plate 16.

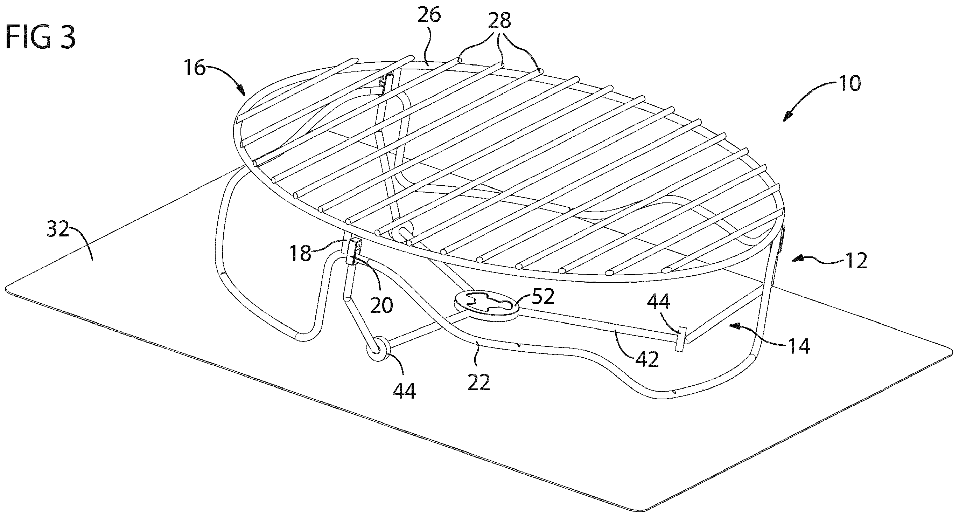

FIG 3 illustrates a schematic perspective view of the support system 10 according to a second embodiment of the present invention.

The support system 10 comprises the upper part 12 and the lower part 14. The upper part 12 includes the support plate 16. In this example, the support plate 16 is the circular grid including the circular ring 26 and the plurality of parallel rectilinear rods 28 attached on said circular ring 26.

Further, the support system 10 comprises the support elements 18, the guiding elements 20 and the guiding rail 22. Moreover, the support system 10 of the second embodiment comprises the bogie 42 with three wheels 44. In general, the bogie 42 includes three or more wheels 44. The turnstile retainer 52 is rigidly connected to the centre of the bogie 42.

In this embodiment, the support plate 16, the three support elements 18 and the guiding rail 22 form the upper part 12, while the bogie 42 with the wheels 44 and the guiding elements 20 belong to the lower part 14. The three support elements 18 extend vertically downwards from the border of the support plate 16. The lower ends of the support elements 18 are connected to the upper horizontal sections of the guiding rail 22 in each case. In this example, each guiding element 20 corresponds with one wheel 44.

The guiding rail 22 is formed as the closed circular loop and includes the horizontal, the vertical and the inclined sections. The guiding rail 22 comprises three equal segments, wherein each segment includes the lower horizontal section, the lower inclined section, the intermediate horizontal section, the upper inclined section, the upper horizontal section and the vertical section arranged in series. The guiding rail 22 is symmetric in view of the 120° rotation around its central vertical axis.

The guiding elements 20 of the lower part 14 enclose at least partially the guiding rail 22 and are moveable along said guiding rail 22 between two adjacent support elements 18 in each case. In this way, the upper part 12 and the lower part 14 are rotatable to each other around their common central vertical axis, wherein the level of the support plate 16 is variable. The three horizontal sections of each segment of the guiding rail 22 correspond with one level of the support plate 16 in each case, so that three different levels of the support plate 16 are adjustable.

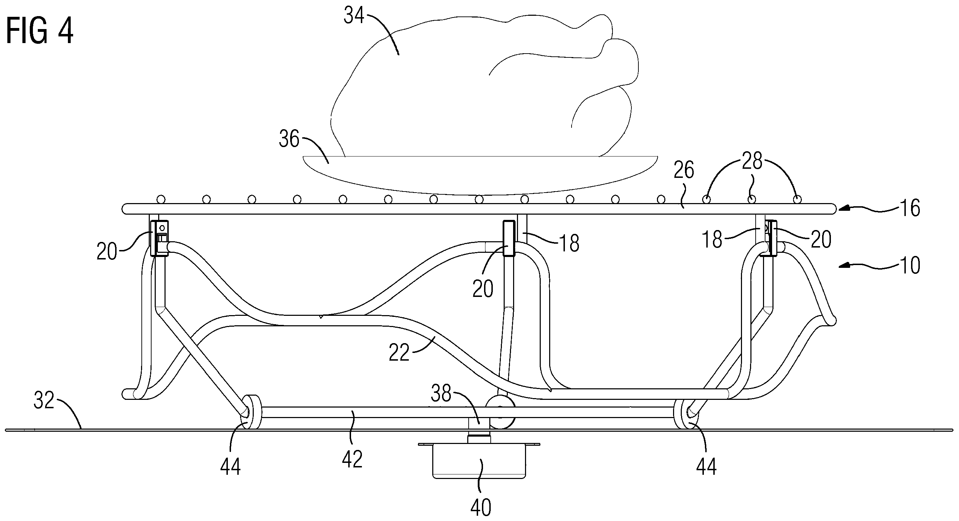

FIG 4 illustrates a schematic front view of the support system 10 according to the second embodiment of the present invention.

The support system 10 is arranged on the bottom 32 of the microwave oven cavity, wherein the wheels 44 are in direct contact to said bottom 32. The bogie 42 with the wheels 44 allows that the support system 10 is rotatable around its central vertical axis in view of the bottom 32 of the microwave oven cavity. The turnstile 38 is connected to the vertical shaft of the motor 40 arranged beneath the bottom 32 of the microwave oven cavity.

The food 34 is placed on the plate 36 arranged on the support plate 16 formed by the circular ring 26 and the rectilinear rods 28. In this embodiment, the support plate 16, the support elements 18 and the guiding rail 22 form the upper part 12 of the support system 10, while the lower part 14 of said support system 10 belongs to the bogie 42 with the wheels 44 and the guiding elements 20.

The upper part 12 is rotatable with respect to the lower part 14 around the common central vertical axis manually by the user, wherein the guiding elements 20 are sliding along the guiding rail 22. In FIG 4 the guiding elements 20 enclose the upper horizontal sections of the guiding rail 22, so that the lowest level of the support plate 16 is selected. After a clockwise rotation of the upper part 12 in view of the lower part 14 manually by the user, the guiding elements 20 would pass the upper inclined sections of the guiding rail 22 and reach the intermediate horizontal sections of said guiding rail 22, so that the intermediate level of the support plate 16 would be selected. After a further clockwise rotation of the upper part 12 in view of the lower part 14 manually by the user, the guiding elements 20 would pass the lower inclined sections of the guiding rail 22 and reach the lower horizontal sections of said guiding rail 22, so that the upper level of the support plate 16 would be selected.

On the one hand, the upper part 12 is rotatable with respect to the lower part 14 around the common central vertical axis manually by the user in order to adjust the level of the support plate 16 and the food 34. On the other hand, the complete support system 10 is rotatable with respect to the bottom of the microwave oven cavity by the motor 40 around the common central vertical axis in order to rotate the food 34 on the support plate 16.

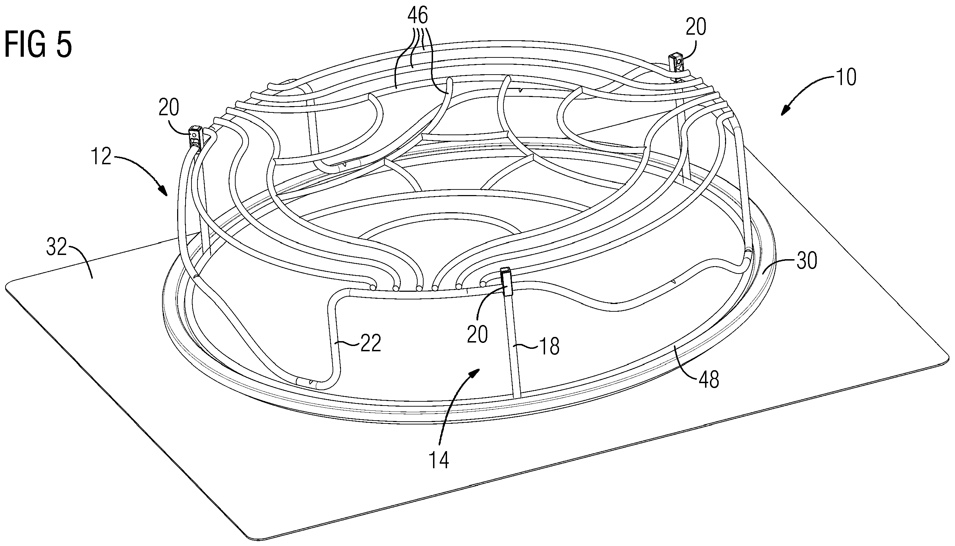

FIG 5 illustrates a schematic perspective view of the support system 10 according to a third embodiment of the present invention.

The support system 10 comprises the upper part 12 and the lower part 14. The upper part 12 includes the support plate 16. In this example, the support plate 16 includes a plurality of bent rods 46. Further, the support system 10 comprises the support elements 18, the guiding elements 20 and the guiding rail 22.

In this embodiment, the support plate 16 and the guiding rail 22 form the upper part 12, while the support elements 18 and the guiding elements 20 belong to the lower part 14. Further, the lower part 14 includes a base part 48 formed as circular ring. The support system 10 is arranged on the turntable 30 of the microwave oven arranged above the bottom 32 of the microwave oven cavity.

The three support elements 18 extend vertically upwards from the base part 48. The guiding elements 20 are attached at the upper ends of the support elements 18 in each case. The outer bent rods 46 of the support plate 16 are directly connected to the upper horizontal sections of the guiding rail 22. The inner bent rods 46 of the support plate 16 are connected to the outer bent rods 46.

The guiding rail 22 is formed as the closed circular loop and includes the horizontal, the vertical and the inclined sections. The guiding rail 22 comprises three equal segments, wherein each segment includes the lower horizontal section, the lower inclined section, the intermediate horizontal section, the upper inclined section, the upper horizontal section and the vertical section arranged in series. The guiding rail 22 is symmetric in view of the 120° rotation around its central vertical axis.

The guiding elements 20 of the lower part 14 enclose at least partially the guiding rail 22 of the upper part 12, so that the guiding rail 22 is moveable through said guiding elements 20 and the upper part 12 is rotatable with respect to the lower part 14 around their common central vertical axis. In this way, the level of the support plate 16 is variable. The three horizontal sections of each segment of the guiding rail 22 correspond with one level of the support plate 16 in each case, so that three different levels of the support plate 16 are adjustable.

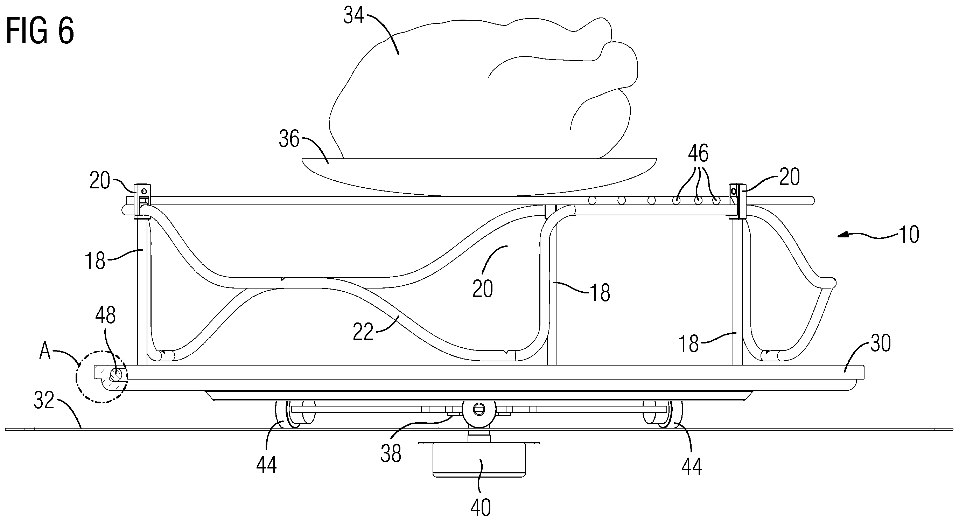

FIG 6 illustrates a schematic front view of the support system 10 according to the third embodiment of the present invention.

The support system 10 is arranged on the turntable 30 of the microwave oven. The turntable 30 is arranged on the bogie 42 with three wheels 44. In general, the turntable 30 is arranged on the bogie 42 with three or more wheels 44. The bogie 42 with the wheels 44 is arranged on the bottom 32 of the microwave oven cavity. The bogie 42 with the wheels 44 forms the bogie assembly for the turntable 30. In this example, said bogie assembly includes the three wheels 44. A turnstile 38 is attached beneath the centre of the turntable 30. Said turnstile 38 is connected to the vertical shaft of the motor 40 arranged beneath the bottom 32 of the microwave oven cavity. The motor 40 is provided for driving the turntable 30.

The food 34 is placed on the plate 36 arranged on the support plate 16 formed by the bent rods 46. In this embodiment, the support plate 16 consisting of the bent rods 46 and the guiding rail 22 form the upper part 12 of the support system 10, while the lower part 14 of said support system 10 is formed by the base part 48, the support elements 18 and the guiding elements 20. A partial sectional front view A within FIG 6 clarifies the arrangement of the base part 48 on the turntable 30. In this example, the diameter of the base part 48 is marginally smaller than the diameter of the turntable 30.

The upper part 12 is rotatable with respect to the lower part 14 around the common central vertical axis manually by the user, wherein the guiding elements 20 are sliding along the guiding rail 22. In FIG 6 the guiding elements 20 enclose the upper horizontal sections of the guiding rail 24, so that the lowest level of the support plate 16 is selected. After a clockwise rotation of the upper part 12 in view of the lower part 14 manually by the user, the guiding elements 20 would pass the upper inclined sections of the guiding rail 22 and reach the intermediate horizontal sections of said guiding rail 22, so that the intermediate level of the support plate 16 would be selected. After a further clockwise rotation of the upper part 12 in view of the lower part 14 manually by the user, the guiding elements 20 would pass the lower inclined sections of the guiding rail 22 and reach the lower horizontal sections of said guiding rail 22, so that the upper level of the support plate 16 would be selected.

On the one hand, the upper part 12 is rotatable with respect to the lower part 14 around the common central vertical axis manually by the user in order to adjust the level of the support plate 16 and the food 34. On the other hand, the turntable 30 with the complete support system 10 is rotatable with respect to the microwave oven by the motor 40 around the common central vertical axis in order to rotate the food 34 on the support plate 16.

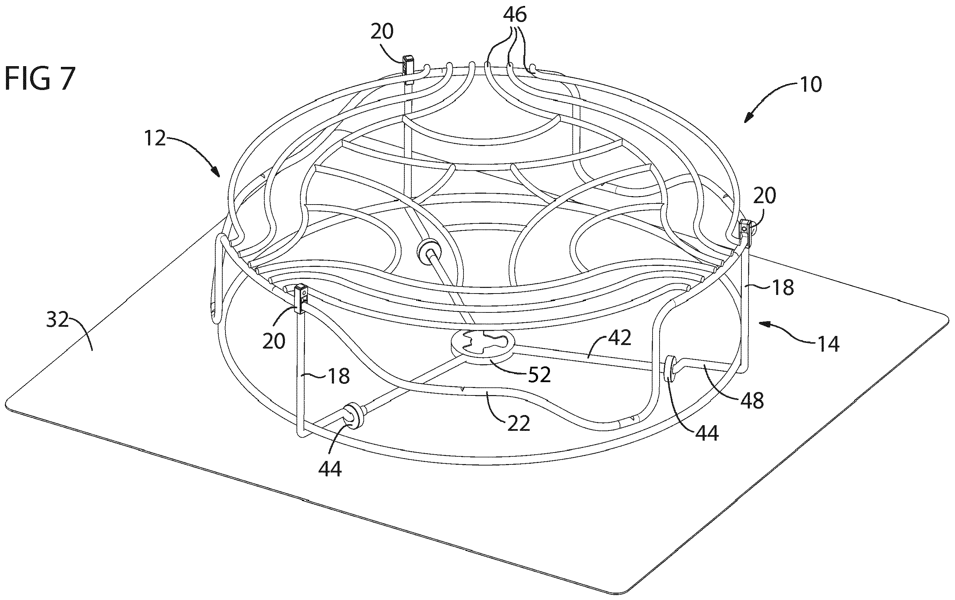

FIG 7 illustrates a schematic perspective view of the support system 10 according to a fourth embodiment of the present invention.

The support system 10 comprises the upper part 12 and the lower part 14. The upper part 12 includes the support plate 16 and the guiding rail 22. In this example, the support plate 16 includes the plurality of bent rods 46. The outer bent rods 46 are directly connected to the upper horizontal sections of the guiding rail 22, while the inner bent rods 46 of the support plate 16 are connected to the outer bent rods 46. The lower part 14 includes the base part 48, the bogie 42 with three wheels 44, three support elements 18 and three guiding elements 20. The turnstile retainer 52 is rigidly connected to the centre of the bogie 42.

The base part 48 is formed as a circular ring. The support elements 18 extend upwards from the base part 48. In this example, the support elements 18 are appendices of the bogie 42. The guiding elements 20 are attached at the upper ends of the support elements 18 in each case. In this example, each support element 18 and guiding element 20 correspond with one wheel 44.

The guiding rail 22 is formed as the closed circular loop and includes the horizontal, the vertical and the inclined sections. The guiding rail 22 comprises three equal segments, wherein each segment includes the lower horizontal section, the lower inclined section, the intermediate horizontal section, the upper inclined section, the upper horizontal section and the vertical section arranged in series. The guiding rail 22 is symmetric in view of the 120° rotation around its central vertical axis.

The guiding elements 20 of the lower part 14 enclose at least partially the guiding rail 22 of the upper part 12 and are moveable along said guiding rail 22, so that the upper part 12 and the lower part 14 are rotatable to each other around their common central vertical axis. In this way, the level of the support plate 16 is variable. The three horizontal sections of each segment of the guiding rail 22 correspond with one level of the support plate 16 in each case, so that three different levels of the support plate 16 are adjustable.

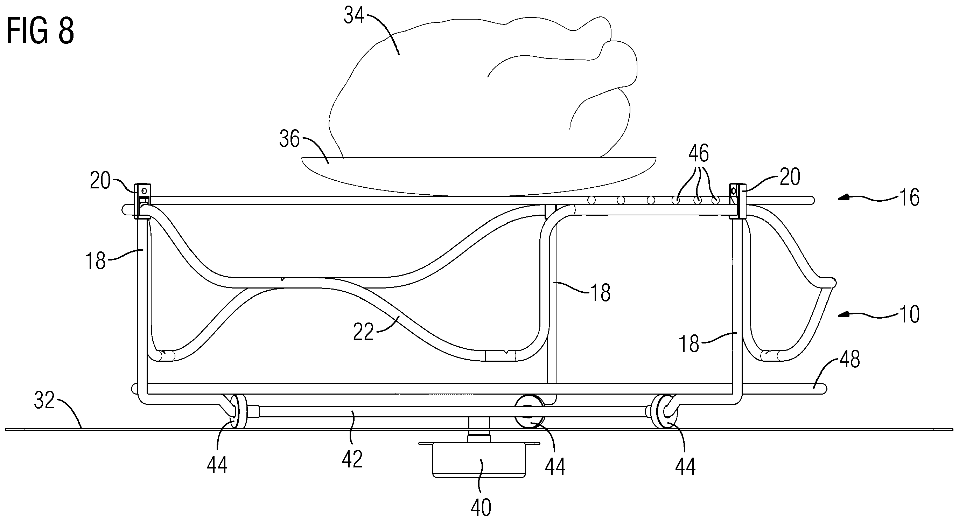

FIG 8 illustrates a schematic front view of the support system 10 according to the fourth embodiment of the present invention.

The support system 10 is arranged on the bottom 32 of the microwave oven cavity, wherein the wheels 44 are in direct contact to said bottom 32. The bogie 42 with the wheels 44 allows that the support system 10 is rotatable around its central vertical axis in view of the bottom 32 of the microwave oven cavity. The turnstile 38 is connected to the vertical shaft of the motor 40 arranged beneath the bottom 32 of the microwave oven cavity.

The food 34 is placed on the plate 36 arranged on the support plate 16 formed by the bent rods 46. In this embodiment, the support plate 16 consisting of the bent rods 46 and the guiding rail 22 form the upper part 12 of the support system 10, while the lower part 14 of said support system 10 is formed by the base part 48, the support elements 18, the guiding elements 20 and the bogie 42 with three wheels 44. The turnstile 38 is arranged in the centre of the bogie 42. The turnstile 38 is connected to the vertical shaft of the motor 40 arranged beneath the bottom 32 of the microwave oven cavity.

The upper part 12 is rotatable with respect to the lower part 14 around the common central vertical axis manually by the user, wherein the guiding elements 20 are sliding along the guiding rail 22. In FIG 8 the guiding elements 20 enclose the upper horizontal sections of the guiding rail 24, so that the lowest level of the support plate 16 is selected. After a clockwise rotation of the upper part 12 in view of the lower part 14 manually by the user, the guiding elements 20 would pass the upper inclined sections of the guiding rail 22 and reach the intermediate horizontal sections of said guiding rail 22, so that the intermediate level of the support plate 16 would be selected. After a further clockwise rotation of the upper part 12 in view of the lower part 14 manually by the user, the guiding elements 20 would pass the lower inclined sections of the guiding rail 22 and reach the lower horizontal sections of said guiding rail 22, so that the upper level of the support plate 16 would be selected.

On the one hand, the upper part 12 is rotatable with respect to the lower part 14 around the common central vertical axis manually by the user in order to adjust the level of the support plate 16 and the food 34. On the other hand, the complete support system 10 is rotatable with respect to the bottom of the microwave oven cavity by the motor 40 around the common central vertical axis in order to rotate the food 34 on the support plate 16.

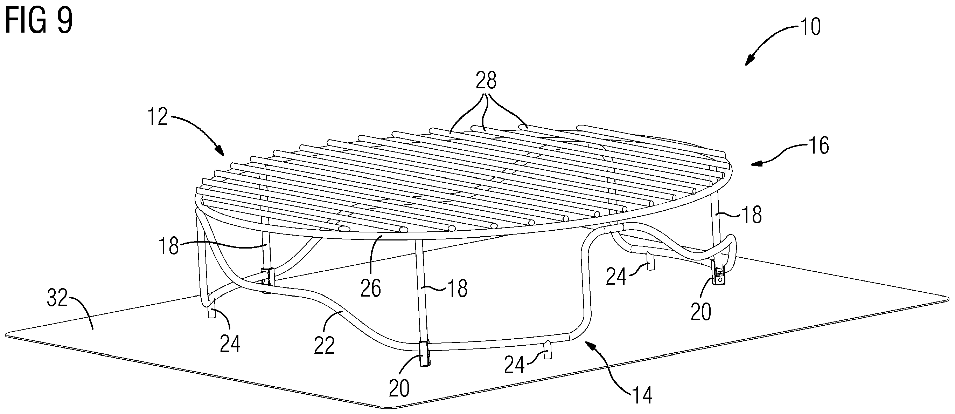

FIG 9 illustrates a schematic perspective view of the support system 10 according to a fifth embodiment of the present invention.

The support system 10 comprises the upper part 12 and the lower part 14. The upper part 12 includes the support plate 16, the support elements 18 and the guiding elements 20, wherein each guiding element 20 corresponds with one support element 18. In this embodiment, the support plate 16 includes the circular ring 26 and the plurality of parallel rectilinear rods 28 attached on said circular ring 26. The lower part 14 includes the guiding rail 22 and foot elements 24. In this example, the lower part 14 includes three foot elements 24. In general, the lower part 14 includes three or more foot elements 24.

The three support elements 18 extend vertically downwards from the border of the support plate 16. Preferably, the three support elements 18 form the corners of an equilateral triangle. Each guiding element 20 is attached at the lower end of the corresponding support element 18. The foot elements 24 are attached at the guiding rail 22 and support said guiding rail 22.

The guiding rail 22 is formed as the closed circular loop and includes horizontal, vertical and inclined sections. In this example, the guiding rail 22 comprises three equal segments. In general, the guiding rail 22 comprises three or more equal segments. Each segment includes the lower horizontal section, the lower inclined section, the intermediate horizontal section, the upper inclined section, the upper horizontal section and the vertical section arranged in series. The guiding rail 22 is symmetric in view of a 120° rotation around its central vertical axis.

The guiding elements 20 of the upper part 12 enclose at least partially the guiding rail 22 of the lower part 14 and are moveable along said guiding rail 22 between two adjacent foot elements 24 in each case. In this way, the upper part 12 is rotatable with respect to the lower part 14 around the common central vertical axis manually by the user, wherein the level of the support plate 16 is variable. The three horizontal sections of each segment of the guiding rail 22 correspond with one level of the support plate 16 in each case, so that three different levels of the support plate 16 are adjustable.

In this embodiment, the support system 10 is arranged on the bottom of the microwave oven cavity. Thus, the vertical position of food 34 arranged on the support plate 16 is adjustable. In this example, three vertical positions of the food 34 can be selected.

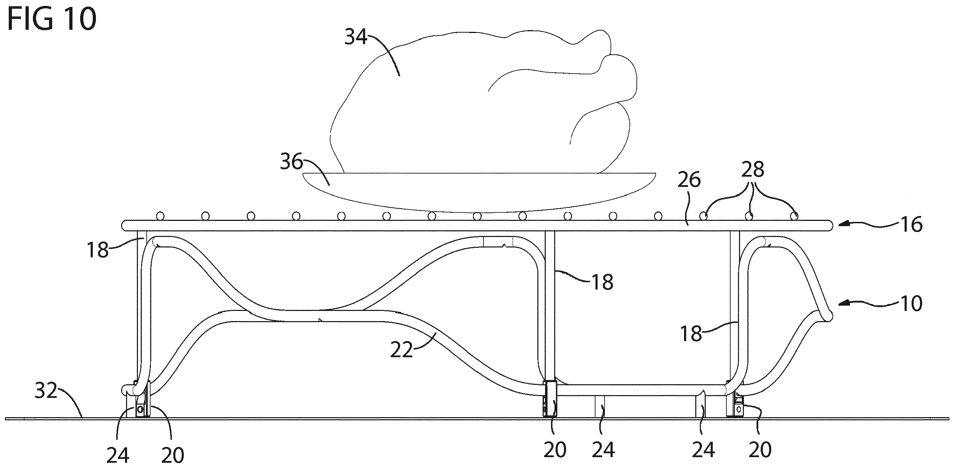

FIG 10 illustrates a schematic front view of the support system 10 according to the fifth embodiment of the present invention. The support system 10 is arranged on the bottom of the microwave oven cavity.

The food 34 is placed on the plate 36 arranged on the support plate 16 formed by the circular ring 26 and the rectilinear rods 28. In this embodiment, the support plate 16, the support elements 18 and the guiding elements 20 form the upper part 12 of the support system 10, while the lower part 14 of said support system 10 is formed by the guiding rail 22 and the foot elements 24.

The upper part 12 is rotatable with respect to the lower part 14 around the common central vertical axis manually by the user, wherein the guiding elements 20 are sliding along the guiding rail 22. In FIG 10 the guiding elements 20 enclose the lower horizontal sections of the guiding rail 24, so that the lowest level of the support plate 16 is selected. After a clockwise rotation of the upper part 12 in view of the lower part 14 manually by the user, the guiding elements 20 would pass the lower inclined sections of the guiding rail 22 and reach the intermediate horizontal sections of said guiding rail 22, so that the intermediate level of the support plate 16 would be selected. After a further clockwise rotation of the upper part 12 in view of the lower part 14 manually by the user, the guiding elements 20 would pass the upper inclined sections of the guiding rail 22 and reach the upper horizontal sections of said guiding rail 22, so that the upper level of the support plate 16 would be selected.

According to the fifth embodiment the upper part 12 is rotatable with respect to the lower part 14 around the common central vertical axis manually by the user in order to adjust the level of the support plate 16 and the food 34.

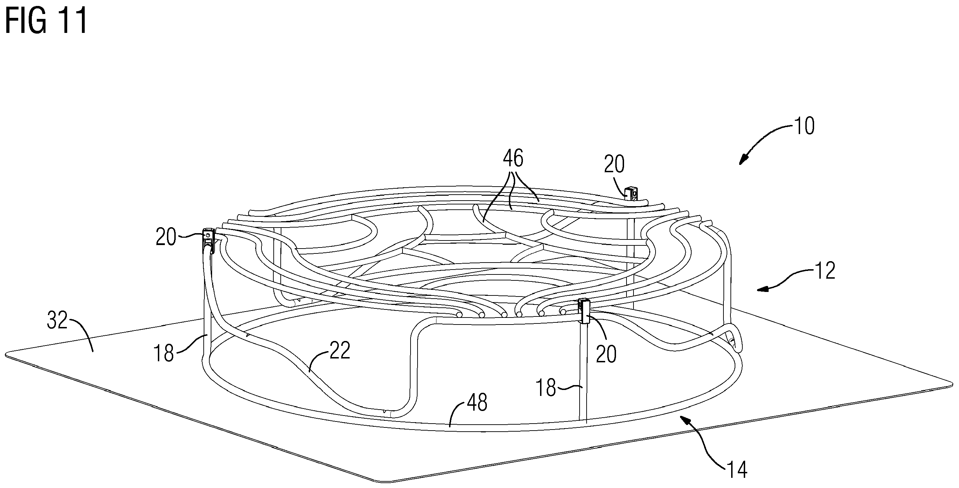

FIG 11 illustrates a schematic perspective view of the support system 10 according to a sixth embodiment of the present invention.

The support system 10 comprises the upper part 12 and the lower part 14. The upper part 12 includes the support plate 16 with the plurality of bent rods 46. Further, the support system 10 comprises the support elements 18, the guiding elements 20, the guiding rail 22 and the base part 48.

In this embodiment, the support plate 16 and the guiding rail 22 form the upper part 12, while the support elements 18, the guiding elements 20 and the base part 48 belong to the lower part 14. The base part 48 is formed as circular ring. The support system 10 is arranged on the bottom 32 of the microwave oven cavity.

The three support elements 18 extend vertically upwards from the base part 48. The guiding elements 20 are attached at the upper ends of the support elements 18 in each case. The outer bent rods 46 of the support plate 16 are directly connected to the upper horizontal sections of the guiding rail 22, while the inner bent rods 46 of the support plate 16 are connected to said outer bent rods 46.

The guiding rail 22 is formed as the closed circular loop and includes the horizontal, vertical and inclined sections. The guiding rail 22 comprises three equal segments, wherein each segment includes the lower horizontal section, the lower inclined section, the intermediate horizontal section, the upper inclined section, the upper horizontal section and the vertical section arranged in series. The guiding rail 22 is symmetric in view of the 120° rotation around its central vertical axis.

The guiding elements 20 of the lower part 14 enclose at least partially the guiding rail 22 of the upper part 12, so that the guiding rail 22 is moveable through said guiding elements 20 and the upper part 12 is rotatable with respect to the lower part 14 around their common central vertical axis. In this way, the level of the support plate 16 is variable. The three horizontal sections of each segment of the guiding rail 22 correspond with one level of the support plate 16 in each case, so that three different levels of the support plate 16 are adjustable.

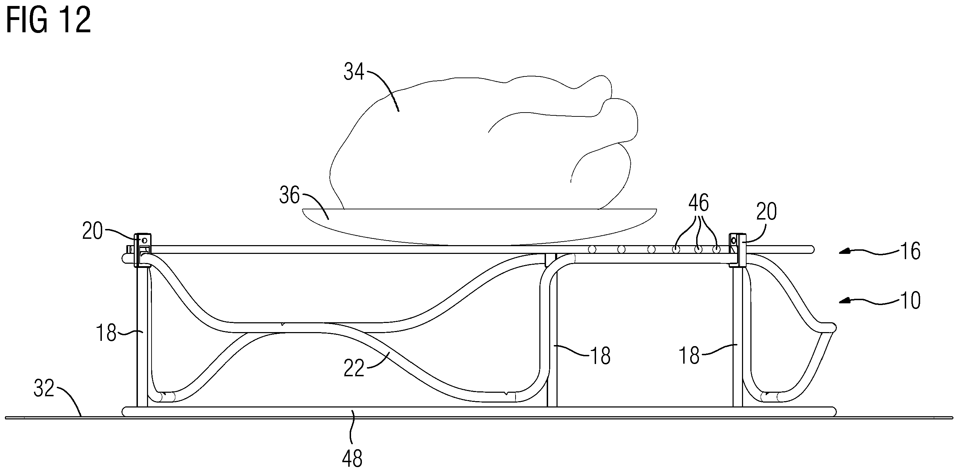

FIG 12 illustrates a schematic front view of the support system 10 according to the sixth embodiment of the present invention.

The support system 10 is arranged on the bottom 32 of the microwave oven cavity. The food 34 is placed on the plate 36 arranged on the support plate 16 formed by the bent rods 46. In this embodiment, the support plate 16 consisting of the bent rods 46 and the guiding rail 22 form the upper part 12 of the support system 10, while the lower part 14 of said support system 10 is formed by the base part 48, the support elements 18 and the guiding elements 20.

The upper part 12 is rotatable with respect to the lower part 14 around the common central vertical axis manually by the user, wherein the guiding elements 20 are sliding along the guiding rail 22. In FIG 12 the guiding elements 20 enclose the upper horizontal sections of the guiding rail 24, so that the lower level of the support plate 16 is selected. After a clockwise rotation of the upper part 12 in view of the lower part 14 manually by the user, the guiding elements 20 would pass the upper inclined sections of the guiding rail 22 and reach the intermediate horizontal sections of said guiding rail 22, so that the intermediate level of the support plate 16 would be selected. After a further clockwise rotation of the upper part 12 in view of the lower part 14 manually by the user, the guiding elements 20 would pass the lower inclined sections of the guiding rail 22 and reach the lower horizontal sections of said guiding rail 22, so that the upper level of the support plate 16 would be selected.

According to the sixth embodiment the upper part 12 is rotatable with respect to the lower part 14 around the common central vertical axis manually by the user in order to adjust the level of the support plate 16 and the food 34.

In the embodiments of the support system 10 mentioned above the guiding rail 22 comprises three substantially equal segments, wherein each segment includes three horizontal sections. In general the guiding rail 22 comprises three or more substantially equal segments. For example, the guiding rail 22 with four equal segments is symmetric in view of a 90° rotation around its central vertical axis. Further, each segment of the guiding rail 22 may include more than three horizontal sections, so that more than three levels of the support plate 16 and the food 34 can be selected.

The embodiments of the support system 10 mentioned above are provided for supporting food 34 being prepared in a microwave oven. In general, the support system 10 of the present invention is provided for an arbitrary object arrangeable at different levels.

FIG 13 illustrates a schematic perspective view of a support grid 50 according to the prior art.

The support grid 50 is circular and includes the circular ring 26 and a plurality of parallel rectilinear rods 28 attached at said circular ring 26. Further, the support grid 50 includes three foot elements 24 extending downwards from the border of said support grid 50. The support grid 50 is arrangeable on the turntable 30 of the microwave oven. The use of the support grid 50 provides a further level for the food 34 in addition to the level of the turntable 30.

FIG 14 illustrates a schematic perspective view of a turntable 30 for the microwave oven according to the prior art.

The level of the turntable 30 is the lowest level of food within the cavity of the microwave oven. The arrangement of the support grid 50 shown in FIG 13 on said turntable 30 increases the level of the food by the height of its foot elements 24. Thus, in the prior art two levels for the food in the microwave oven can be adjusted by putting the support grid 50 onto the turntable 30 and by removing said support grid 50 from the turntable 30.

In contrast, the support system 10 according to the present invention allows an adjusting of several levels of the support plate 16 and food 34 by rotating the upper part 12 of the support system 10 in view of the lower part 14 of said support system 10.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: support system
- 12: upper part
- 14: lower part
- 16: support plate
- 18: support element
- 20: guiding element
- 22: guiding rail
- 24: foot element
- 26: circular ring
- 28: rectilinear rod
- 30: turntable
- 32: bottom
- 34: food
- 36: plate
- 38: turnstile
- 40: motor
- 42: bogie
- 44: wheel
- 46: bent rod
- 48: base part
- 50: support grid
- 52: turnstile retainer

- A: partial sectional front view

## Claims

1. A support system (10) for an object, in particular for food (34) being treated, wherein:
- the support system (10) comprises an upper part (12) and a lower part (14),
- the upper part (12) includes a support plate (16) for bearing the object (34),
- the support system (10) comprises at least three guiding elements (20) and a guiding rail (22),
- the guiding elements (20) belong to one of the upper part (12) or the lower part (14), while the guiding rail (22) belongs to the other one of the upper part (12) or the lower part (14),
- the guiding rail (22) is formed as a circular ring and includes at least three identical segments,
- each segment of the guiding rail (22) includes at least three horizontal sections arranged at different levels,
- the upper part (12) is rotatable with respect to the lower part (14) around a common vertical central axis,
- the guiding elements (20) are sliding along the guiding rail (22) during the rotation of the upper part (12) with respect to the lower part (14), and
- the level of the support plate (16) is adjustable by the rotation of the upper part (12) with respect to the lower part (14).

2. The support system according to claim 1,
**characterised in that**
each segment of the guiding rail (22) includes at least two inclined sections arranged between two adjacent horizontal sections.

3. The support system according to claim 1 or 2,
**characterised in that**
the guiding rail (22) includes at least three vertical sections arranged between two adjacent segments of said guiding rail (22).

4. The support system according to any one of the preceding claims,
**characterised in that**
the guiding elements (20) enclose partially or completely the guiding rail (22).

5. The support system according to any one of the preceding claims,
**characterised in that**
the support plate (16) is a grid.

6. The support system according to any one of the preceding claims,
**characterised in that**
the upper part (12) includes at least three support elements (18) extending downwards from the support plate (16), wherein the guiding elements (20) are attached at the lower ends of said support elements (18) in each case, while the lower part (14) includes the guiding rail (22) and at least three foot elements (24) extending downwards from said guiding rail (22).

7. The support system according to any one of the claims 1 to 5,
**characterised in that**
the upper part (12) includes the guiding rail (22), while the lower part (14) includes the guiding elements (20).

8. The support system according to claim 7,
**characterised in that**
the lower part (14) includes at least three support elements (18), wherein the guiding elements (20) are attached at the upper ends of said support elements (18).

9. The support system according to claim 8,
**characterised in that**
the lower part (14) includes a base part (48) formed as a circular ring, wherein the support elements (18) extend upwards from said base part (48).

10. The support system according to claim 8,
**characterised in that**
the lower part (14) includes a bogie (42) with at least three wheels (44), wherein the support elements (18) extend upwards from said bogie (42), and wherein preferably a turnstile (38) is arranged in the centre of said bogie (42).

11. The support system according to claim 10,
**characterised in that**
the bogie (42) is rotatable around a central vertical axis and drivable or driven by a motor (40).

12. A cooking oven, in particular a microwave oven or an oven with microwave heating function,
**characterised in that**
the cooking oven comprises at least one support system (10) according to any one of the preceding claims.

13. The cooking oven according to claim 12,
**characterised in that**
the cooking oven comprises at least one turntable (30) for supporting the support system (10), so that the support system (10) is also rotatable.

14. The cooking oven according to claim 12,
**characterised in that**
the cooking oven comprises at least one motor (40) connectable or connected to the lower part (14) of the support system (10), so the support system (10) is rotatable around its central vertical axis.

15. The cooking oven according to claim 14,
**characterised in that**
the motor (40) is arranged beneath a bottom (32) of a cavity of the cooking oven, wherein preferably said motor (40) allows a direct drive of the lower part (14) of the support system (10).
